Europäisches Patentamt

European Patent Office

Office européen des brevets

(19)

(11) Veröffentlichungsnummer: **0 299 268**
**A2**

## (12) EUROPÄISCHE PATENTANMELDUNG

(21) Anmeldenummer: 88110226.3

(22) Anmeldetag: 27.06.88

(51) Int. Cl.⁴ **G21C 19/10 , G21C 17/00**

(30) Priorität: 09.07.87 DE 8709485 U

(43) Veröffentlichungstag der Anmeldung:
18.01.89 Patentblatt 89/03

(84) Benannte Vertragsstaaten:
CH DE FR LI NL

(71) Anmelder: **Siemens Aktiengesellschaft Berlin und München**
**Wittelsbacherplatz 2**
**D-8000 München 2(DE)**

(72) Erfinder: **Forster, Josef**
**Fasanenstrasse 19**
**D-8606 Hirschaid(DE)**
Erfinder: **Selinger, Johann**
**Regelbacherstrasse 17**
**D-8507 Oberasbach(DE)**

(54) **Greifwerkzeug für eine Vorrichtung zur fernbetätigten Entnahme von Proben aus einem Behälter, insbesondere einem Reaktordruckbehälter.**

(57) Das Greifwerkzeug weist eine an einem Mast (1) angeordnete Führungsstange (4) auf, an der mindestens zwei nach Art eines zweiarmigen Hebels ausgebildete Klinken (5, 6) in je einem Drehpunkt in der Weise gelagert sind, daß sie bei Betätigung einen Kopf (10) des Gehäuses der Probe zangenartig umgreifen. Die Führungsstange (4) ist teleskopartig federnd an einem Kupplungsteil (2a) gelagert, dem ein Gegenkupplungsteil (1a) am Mast (1) zugeordnet ist. Die Führungsstange (4) ist ferner von einer Buchse (13) umgeben, die jeweils in eine Führungsnut (5a, 6a) der Klinken (5, 6) eingreifende Führungszapfen (14, 15) aufweist und durch mindestens einen fernbetätigbaren Linearantrieb in der Längsachse der Buchse (13) verschiebbar ist.

FIG 1

EP 0 299 268 A2

## Greifwerkzeug für eine Vorrichtung zur fernbetätigten Entnahme von Proben aus einem Behälter, insbesondere einem Reaktordruckbehälter

Die Erfindung bezieht sich auf ein Greifwerkzeug für eine Vorrichtung zur fernbetätigten Entnahme von Proben aus einem Behälter, insbesondere einem Reaktordruckbehälter, gemäß dem Oberbegriff des Anspruchs 1.

An der Außenwand des Kernbehälters eines Reaktordruckbehälters ist ein Kanal vorgesehen, in den nach dem ersten Brennelemente zyklus eine in einer Kapsel angeordnete Bestrahlungsprobensäule eingesetzt wird. Nach dem zweiten Brennelementzyklus wird die Kapsel mit der Probe aus dem Reaktordruckbehälter entnommen und am Rande des Brennelementebeckens unter Wasser abgehängt. Vom Brennelementebecken aus wird die Probenentnahme vorgenommen. Dann wird eine neue Bestrahlungsprobe in den Reaktordruckbehälter eingesetzt.

Es ist bekannt, zur Entnahme von Proben ein Greifwerkzeug zu verwenden, das eine an einem Mast angeordnete Führungsstange aufweist, an der Klinken in je einem Drehpunkt in der Weise gelagert sind, daß sie bei Betätigung einen Kopf des Gehäuses der Probe zangenartig umgreifen. Das Greifwerkzeug wird an einem Kran hängend zum Reaktordruckbehälter hin abgelassen, bis es auf dem Kopf des Halters der Probe aufsitzt, wobei die Klinken in den Probenkopf einrasten und ihm zangenartig umfassen. Dabei kann beim Aufsetzen des Greifwerkzeuges, das aus größerer Höhe ferngesteuert durchgeführt werden muß, eine Stauchung oder Beschädigung der Bestrahlungsprobe auftreten.

Der Erfindung liegt die Aufgabe zugrunde, eine Vorrichtung zur fernbetätigten Entnahme einer in einem Gehäuse angeordneten Probe anzugeben, bei der eine Deformation des Gehäuses und damit eine Beschädigung der Probe vermieden wird.

Diese Aufgabe wird bei einem Greifwerkzeug der eingangs genannten Art erfindungsgemäß dadurch vermieden, daß die Führungsstange teleskopartig federnd an einem Kupplungsteil gelagert ist, dem ein Gegenkupplungsteil am Mast zugeordnet ist und daß die Führungsstange von einer Buchse umgeben ist, die jeweils in eine Führungsnut der Klinken eingreifende Führungszapfen aufweist und durch mindestens einen fernbetätigbaren Linearantrieb in der Längsachse der Buchse verschiebbar ist.

Auf diese Weise kann das Greifwerkzeug bei geöffneten Klinken auf den Kopf des Gehäuses der Probe aufgesetzt werden, wobei die beim Aufsetzen auf den Kopf des Gehäuses der Probe einwirkende Kraft durch die federnde Lagerung der Führungsstange an dem Mast klein gehalten und eine Beschädigung der Bestrahlungssäule verhindert wird. Es ist vorteilhaft, das Greifwerkzeug mit einem Kupplungsteil zu versehen, der an ein Gegenkupplungsteil eines Mastes zum Ziehen von Brennelementen angepaßt ist. Dadurch kann für das Greifwerkzeug der in einem Kernkraftwerk ohnehin vorhandene Mast zum Ziehen der Brennelemente verwendet werden, so daß ein gesonderter Mast für das Greifwerkzeug entfällt. Dadurch ergibt sich gegenüber der bekannten Ausführung eine erhebliche Vereinfachung, da nur der Kopf ausgewechselt zu werden braucht.

Die Erfindung und deren Vorteile werden anhand der Zeichnung näher erläutert. Darin zeigen

FIG 1 einen Längsschnitt eines Greifwerkzeuges vor dem Eingriff in den Kopf des Gehäuses einer Probe und

FIG 2 die Lage der Klinken des Werkzeuges, wenn sie den Kopf des Gehäuses der Probe zangenartig umgreifen.

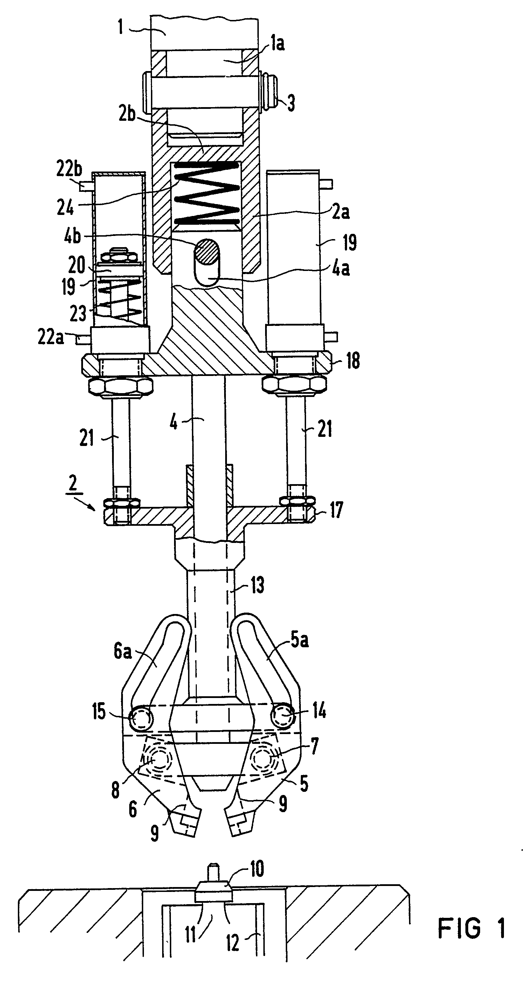

Wie FIG 1 zeigt, ist an das untere Ende eines Mastes 1, der an einen Kran anhängbar ist, ein Greifwerkzeug 2 ankuppelbar. Der Mast 1 hat einen als Zapfen ausgebildeten Kupplungsteil 1a, der in einen als Hülse ausgebildeten Gegenkupplungsteil 2a einsteckbar ist. Die Hülse 2a ist oben an dem Zapfen 1a mittels eines Bolzens 3 gehalten. Unten ist in der Hülse 2a eine Führungsstange 4 teleskopartig federnd gelagert, wobei in der Hülse 2a eine Druckfeder 24 angeordnet ist, die sich einerseits an einem Zwischenboden 2b und andererseits an der Stirnfläche der Führungsstange 4 abstützt. Der Federweg wird durch ein Langloch 4a, durch das ein Bolzen 4b hindurchgeführt ist, der in der Hülse 2a verankert ist, begrenzt.

An dem anderen Ende der Führungsstange 4 sind zwei nach Art eines zweiarmigen Hebels ausgebildete Klinken 5, 6 in je einem Drehpunkt 7, 8 gelagert. Die Klinken 5, 6 dienen zum Erfassen eines Kopfes 10, der mittels eines Halters 11 an einer Kapsel 12 angeordnet ist, in der eine Probe untergebracht wird. Die Klinken 5, 6 haben an der Innenseite Greifflächen 9, die an die Form des Kopfes 10 angepaßt sind, so daß sie in der geschlossenen Stellung den Kopf 10 formschlüssig umgreifen.

Die Führungsstange 4 ist von einer Buchse 13 umgeben, die jeweils in eine Führungsnut 5a bzw. 6a der Klinken 5, 6 eingreifende Führungszapfen 14, 15 aufweist. Diese Führungszapfen 14, 15 sind an einem Querträger 16 der Buchse 13 fest angeordnet und durch einen fernbetätigbaren Linearantrieb, der auf einen Flansch 17 der Buchse einwirkt, in der Buchsenlängsachse verschiebbar.

Der Linearantrieb ist vorteilhafterweise als Druckmittelantrieb ausgebildet, bei dem an einem Flansch 18 der Führungsstange Zylinder 19 mit Kolben 20 angeordnet sind. Die Kolben 20 sind über je eine Kolbenstange 21 mit dem Flansch 17 der Buchse 13 verbunden. Die Zylinder 19 werden zum Öffnen der Klinken 5, 6 über Steuerleitungen 22b und zum Schließen der Klinken 5, 6 über Steuerleitungen 22 a mit Druckluft oder einem Hydraulik-Mittel gespeist. In den Zylindern 19 sind zusätzlich Rückholfedern 23 eingebaut, die bei einem plötzlichen Druckabfall in den Steuerleitungen 22a sicherstellen, daß die Kolben 20 in ihrer oberen Lage verbleiben und die Klinken 5, 6 geschlossen bleiben.

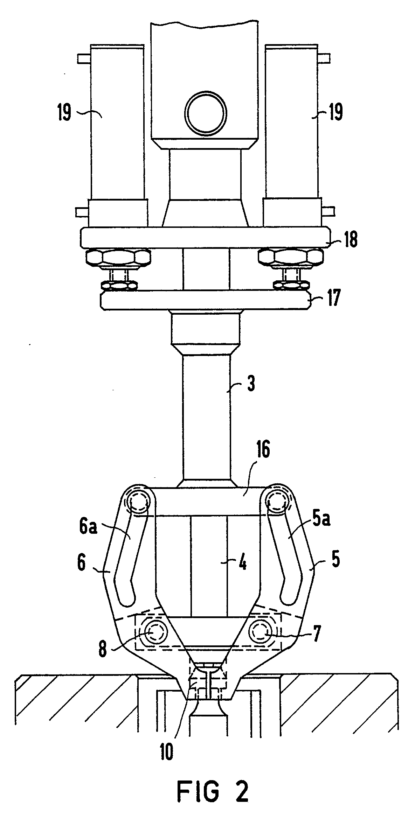

Zur fernbetätigten Entnahme der Probe werden die Steuerleitungen 22 an ein Pneumatiknetz angeschlossen. Anschließend wird eine Funktionsprobe des Greifwerkzeuges 2 bei am Kran hängenden Mast 1 vorgenommen. Sind die Kolben 20 ausgefahren, so stehen die Klinken offen. In dieser Stellung wird das Greifwerkzeug 2 vom Kran abgesenkt, bis es auf dem Kopf 10 des Halters 11 der Kapsel 12 für die Probe aufsitzt. Dabei federt der vorstehende Bolzen 10a ganz ein. Dadurch, daß die Führungsstange 4 in der Hülse 2a über eine Feder 24 teleskopartig nachgebend gelagert ist, wird zusätzlich eine starke Dämpfung eines beim Aufsetzen des Greifwerkzeuges 2 auftretenden Stoßes erzielt, so daß eine Beschädigung der Bestrahlungssäule vermieden wird. Nach dem Aufsetzen des Greifwerkzeuges werden die Kolben 20 durch Beaufschlagen der Steuerleitungen 22b eingefahren, so daß sich die Klinken 5, 6 formschlüssig um den Kopf 10 schließen (FIG 2). Nun kann die Bestrahlungsprobe gezogen und in einem Brennelementebecken abgehängt werden. Die Rückholfedern 23 stellen bei einem unbeabsichtigten Druckabfall in den Druckmittelleitungen 22 sicher, daß die Klinken 5, 6 während des Transports mit dem Kran geschlossen bleiben.

Zum Lösen der Klinken werden die Kolben 20 ausgefahren, indem den Steuerleitungen 22b Druckmittel zugeführt wird.

**Ansprüche**

1. Greifwerkzeug für eine Vorrichtung zur fernbetätigten Entnahme von Proben aus einem Behälter, insbesondere einem Reaktordruckbehälter, das eine an einem Mast angeordnete Führungsstange aufweist, an der mindestens zwei nach Art eines zweiarmigen Hebels ausgebildete Klinken in je einem Drehpunkt in der Weise gelagert sind, daß sie bei Betätigung einen Kopf des Gehäuses der Probe zangenartig umgreifen, **dadurch gekennzeichnet,** daß die Führungsstange (4) teleskopartig federnd an einem Kupplungsteil (2a) gelagert ist, dem ein Gegenkupplungsteil (1a) am Mast (1) zugeordnet ist und daß die Führungsstange (4) von einer Buchse (13) umgeben ist, die jeweils in eine Führungsnut (5a, 6a) der Klinken (5, 6) eingreifende Führungszapfen (14, 15) aufweist und durch mindestens einen fernbetätigbaren Linearantrieb in der Längsachse der Buchse (13) verschiebbar ist.

2. Greifwerkzeug nach Anspruch 1, **dadurch gekennzeichnet,** daß als Linearantrieb ein Druckmittelantrieb dient, bei dem an der Führungsstange (4) mindestens ein Zylinder (19) mit Kolben (20) angeordnet ist, der über eine Kolbenstange (21) mit der Buchse (13) verbunden ist.

3. Greifwerkzeug nach Anspruch 2, **dadurch gekennzeichnet,** daß im Zylinder (19) eine Rückholfeder (23) angeordnet ist, um bei einem Druckabfall in den Steuerleitungen (22a) die Klinken (5, 6) in der geschlossenen Lage zu halten.

4. Greifwerkzeug nach einem der Ansprüche 1 bis 3, **dadurch gekennzeichnet,** daß der Kupplungsteil (2a) des Greifwerkzeuges an einem Gegenkupplungsteil eines Mastes zum Ziehen von Brennelementen angepaßt und mit diesem kuppelbar ist.

87 P 6053 E

FIG 1

87 P 6053 E

FIG 2